# EUROPEAN PATENT APPLICATION

(11) **EP 1 031 920 A2**
(43) Date of publication of application: **30.08.2000**
(21) Application number: 00102089.0
(22) Date of filing: 03.02.2000
(51) Int. Cl.: G06F 9/445

(54) **Editable and automatically generated configuration data**

(30) Priority: 24.02.1999 EP 99103509
(71) Applicant: International Business Machines Corporation, Armonk, NY 10504 (US)
(72) Inventor: Bosch, Georg, 71101 Schönaich (DE); Lenz, Norbert Dr., 71106 Magstadt (DE)
(74) Representative: Teufel, Fritz, Dipl.-Phys.

(57) **Abstract**

The basic idea comprised of the present invention is to provide some separation and coexistence of manual and automatically generated configuration data in mainframe and mainframe like systems. This is achieved by keeping the format of the manual configuration data, but distinctly separating the entries of products configured in the 'traditional' way, i.e., the manual part, which is edited by the system programmer from the entries of products configured with configuration programs, i.e., the automatically generated, part.

## Description

### 1. BACKGROUND OF THE INVENTION

### 1.1 FIELD OF THE INVENTION

The invention relates generally to system software of computer systems, particularly of mainframe computers and mid range computer systems, and deals more particularly with a method and system for improving the handling of system or application program configuration parameters controlled by the operating system for a correct run of such programs.

### 1.2 DESCRIPTION AND DISADVANTAGES OF PRIOR ART

When software products, i.e., the above mentioned programs, are installed on such computer systems, they must be configured for compliance with requirements set up by the operating system and required for coexistence with other programs running in such systems. A plurality of configuration data is needed in that context to control the behavior of resources of the computer system. Typically, resources are owned or managed by a product, i.e., a 'supporter' (program) which is the owner of the corresponding configuration data for the resources. The resources are used either by the supporter itself or by some other exploiting product, i.e., an 'exploiter' (program). Exploiters can be system programs or application programs. After complete configuration the software products, i.e., the supporters and exploiters can be executed.

Caused by a diversification of mainframes into a high price segment with high-end system performance and with highly complex requirements to the system management and system customization and thus to skill of staff on the one hand, and diversification into a low price segment on the other hand where low total costs for the sum of hardware and maintenance costs is required the need arises for both segments to simplify the management of system variables in order to enable system management to be performed by a reduced number of staff having a reduced skill in system programming in the low price segment and to provide an effective control of the increased complexity of system parameters in the high price segment.

In prior art mainframe systems such requirements can only be met by a respective large number of well skilled staff because an enormous number of system variables are to be managed in manually editable configuration files such as the SYS1.PARMLIB for OS/390. In UNIX systems the system variables usually reside in files in the /etc directory.

This, however, is not adequate to the intended aim to provide a low price mainframe solution.

A possibility to solve the problems stated above might be to introduce some non-readable configuration files as they were introduced in PC systems caused by their own growing complexity. The installation and customization of products is here supported by special configuration programs, e.g. wizards, to support installation and customization of programs.

When in a first 'share everything' approach both, the system programmer and the configuration program manipulate the same data, this approach is, however, error prone. Inconsistent configurations can easily be produced. The consequences are lengthy debugging, and in the worst case the system cannot be started without problems. Since system programmers need not obey conventions when editing the configuration data, the configuration programs would have to be very complex and flexible to be able to handle this data. This is, however, not possible for mainframe applications because in a mainframe system like IBM S/390 the number of system variables which are necessarily to be managed by such an automatic installation wizard is much too large. For comparison: In mainframe systems there are thousands of system variables, in an advanced PC system there are an order of magnitude, e.g., 10 times less.

With that increased number of system variables there is a further problem involved: in order to achieve a particular effect not only one system parameter might be set onto a particular value, but instead, in generality several parameters can be set individually to achieve the same effect. Thus, there is no unique relation between the setting of one parameter and the associated effect.

A further difference to PC systems is the increased complexity of mainframe applications and the resulting constraint, to customize the mainframe system correctly in order to reflect the diverse requirements implied by the variety of complex mainframe applications being hosted thereon.

Instead, a second so-called 'share nothing' approach should be envisaged in which all installed programs, i.e., 'products', are installed by a respective installation wizard without any manual inter-operation being required any more by a system programmer. This requires, however, that each product installed on the mainframe system does not share its system parameters with parameters being necessarily edited manually by the system programmer according to the traditional way. Thus, it is required that all products running on the operating system are adapted to keeping their configuration data in a format, that cannot be manipulated manually any more. A coexistence of such automatically configured products with products that can only be configured manually is not possible. As a result, one would have to demand from each product seller to comply with a new 'standard', i.e., the automatic configuration standard until a certain date in near future as it was done with the corresponding products for PC systems, e.g., as it was demanded to comply with WINDOWS NT's active registry. This is, however, not realistic mainly out of three reasons:

Mainframe applications must be customized, they are not able to run with standard parameter settings as it is mostly the case with PC systems,

The plurality of locations where system parameters are expected to be found by the products is quite large which complicates such standardization step,

Due to the complexity of mainframe systems and applications there is a broad variety of different parameters which could be set each differently in order to achieve one selected particular effect, i.e., there is no unique relation between the setting of one system parameter and the corresponding effect.

Thus, a short time standardization of mainframe application towards an automatic configuration cannot be expected.

As a further disadvantage of prior art there is usually no easy way for the customer to manually fix the configuration in case of emergency, e.g., when an error of a configuration program occurs.

### 1.3 OBJECTS OF THE INVENTION

It is thus the object of the present invention to provide a method and system for improving handling of program configuration data in mainframes and mainframe-like computer systems being arranged for simultaneous running of a plurality of programs which provides for introduction of an automatic configuration standard.

### 2. SUMMARY AND ADVANTAGES OF THE INVENTION

Said objects of the invention are achieved by the features stated in enclosed independent claims. Further advantageous arrangements and embodiments of the invention are set forth in the respective subclaims.

The basic idea comprised of the present invention is to provide some separation and coexistence of manual and automatically generated configuration data. According to the present invention a new way of organizing the configuration data is provided allowing a continuous transition from the status quo which is characterized by manually editing system parameters to the desirable situation where most (or all) configuration data is automatically generated and checked.

Over time more and more products can be configured with configuration programs, while the customer still stays in control of the total configuration.

This is achieved by keeping the format of the manual configuration data, but distinctly separating the entries of products configured in the 'traditional' way, i.e., the manual part, which is edited by the system programmer from the entries of products configured with configuration programs, i.e., the automatically generated, part.

These distinct parts of the configuration data have the following characteristics:

The manual part is completely under the customer's control and can be organized according to the customer's conventions.

The automatically generated part can be read by the system programmer for the purposes of problem detection, but the system programmer cannot make any changes to it. It can only be edited by the configuration program. The configuration program owns the conventions on how the entries in its part are organized. When there are 'public' parameters having each different entries belonging each to different programs which must be shared between them, no conflict exists when a setting for said public parameter is found which satisfies all program requirements. According to the invention this is done by generating an 'union entry' which can represent e.g., a maximum of, or a minimum of, or the concatenation of, or the union of a plurality of concurrent different values. Further types of relationships are taken as they are required by the individual type of parameter.

As more and more products can be installed with configuration programs, the automatically generated part contains more data, while the manual part contains less data.

The following prerequisites are key for enabling the inventional concept of separation and coexistence of manual and automatically generated configuration data:

Firstly, the supporters must allow for separation of private and public configuration data, and secondly, the supporters must allow for the mapping of distinct configuration entries to a single configuration entry preserving the semantics without creating conflicts.

The following advantages are achieved according to the present invention when the above requirements are met:

The realization of the inventional concepts allows for a continuous enhancement of product configuration. Over time more and more products can be configured with configuration programs. For example, in the case of OS/390operation system about 70 products must be configured. Using configuration programs the elapsed time can be reduced from 1 - 2 months to a few days, but it is impossible to achieve this from one release to the next. A continuous configuration enhancement of more and more products can only be achieved over time.

Due to the separation of manually and automatically generated parts configuration is less error prone.

Further, the configuration programs are less complex, since they own the conventions to be used for the automatically generated part. If a configuration program would have to interpret configuration data edited by a system programmer, the complexity of the configuration program would rise in an order of magnitude, e.g., 10 times as complex.

Finally, the customer still has the ability, to manually fix or update the configuration in emergency cases.

### 3. BRIEF DESCRIPTION OF THE DRAWINGS

The present invention is illustrated by way of example and is not limited by the shape of the figures of the accompanying drawings in which:
- Fig. 1: is a schematic representation of the essential participants in a configuration process according to the present invention,
- Fig. 2: is a schematic representation of the essential features of the control flow during installation and configuration of a product according to a preferred embodiment of the method according to the present invention,
- Fig. 3: is a schematic representation of the essential features of the control flow when a supporter S processes configuration data.

### 4. DESCRIPTION OF THE PREFERRED EMBODIMENT

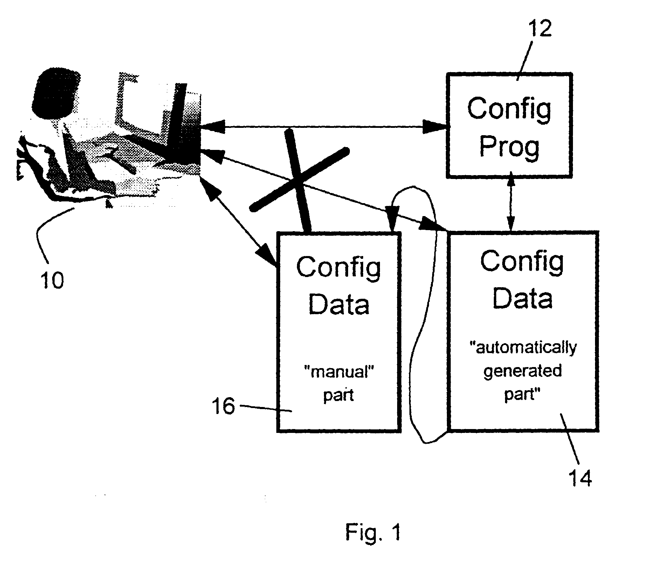

With general reference to the figures and with special reference now to Fig. 1 a system programmer 10 interacts with a configuration program 12 of a product during its installation. The configuration program writes configuration parameter entries in an 'automatically generated part' 14 either in the case when these parameters are private parameters, i.e., parameter entries which are not touched or influenced by other products, or, when the parameter is known to be involved into concurrent usage by other products, but is as well of 'additive' nature. This will be described in more detail down below;

Some small rest of parameters which are known to be involved into concurrent usage by other products as well and which are of 'exclusive' nature are written into the 'manual part' 16 for the configuration data. Exclusive are values which can be used only for one exploiter. When such a value would be used for the wrong product an error would occur, or, depending of the type of parameter, some wrong not intended action would be effectuated. An example is given down below. In those cases, the system programmer 10 keeps control over all parameter settings as it is the case in prior art systems.

For the most cases, however, a manual editing of parameter entries by the system programmer is not required any more, see the crossed-out arrow in Fig. 1.

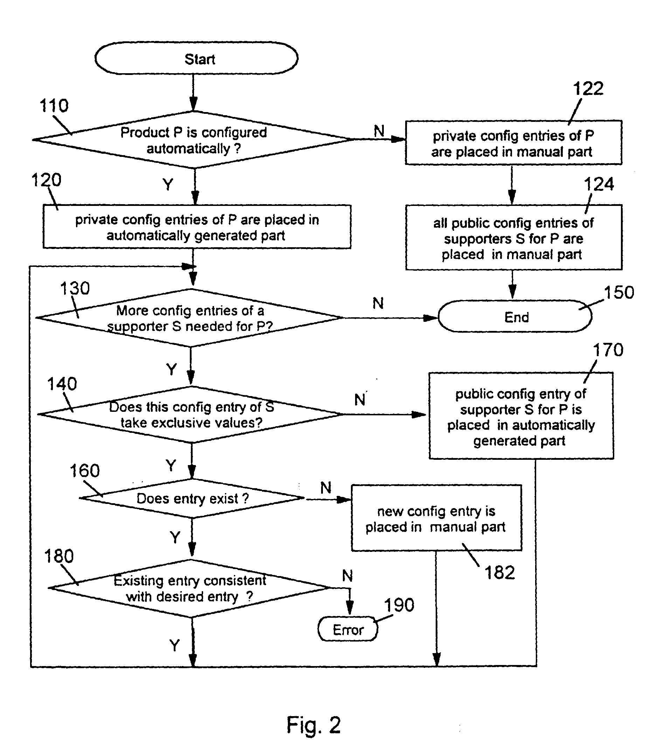

For a better understanding of the principles of the invention and the schema given in Fig. 2 the configuration data of a supporter S mentioned above can be divided into two categories:

Private configuration entries of S: they have the property that those entries cannot be modified by exploiters.

Public configuration entries of S for exploiters E1, E2, ....: they have the property that these entries will have to be updated, if exploiters E1, E2 ... are installed. Here a special control is necessary, either to take a union value suitable for all exploiters, or, in the case of an exclusive entry a manual control by the system programmer, or, a subsequent, maybe periodically alternating or changing setting of the value satisfying the respective exploiters subsequently.

For the vast majority of both types of configuration entries, i.e., public and private, a separation into a manual part and automatically generated part is possible.

With reference to an arbitrary supporter S the private configuration data of S will exist only once and its placement depends on the installation mechanism for S. Since this configuration data does not interfere with any other exploiter, the placement of this private data does not influence the behavior of S and any other exploiter.

The public configuration data is typically of additive nature, because such public data are intended to support several exploiters. Said property is used now as a basic feature of the present invention:

In most cases public configuration data can thus be kept in distinct entries which can be napped to a single set of configuration data preserving the semantics without creating conflicts. For further detail some examples are given next below:

The lists of PATH entries as they are used in DOS /WINDOWS/ UNIX can be concatenated to a single PATH entry.
- Entry A:: PATH=C:\;C:\PATHI1
- Entry M:: PATH=D:\PATH2;D:\PATH3
- Result:: PATH=C:\;C:\PATH1;D:\PATH2;D:\PATH3

Numerical values like the FILES= entry in DOS / WINDOWS can be mapped to a single FILES= entry with the maximum number of values specified.
- Entry A:: FILES=30
- Entry B:: FILES=50
- Result:: FILES=50

The record type numbers to be processed by SMF (System Management Facilities in OS/390) specified in the TYPE entries can be mapped to a single TYPE entry covering the union of all specified record type numbers.
- Entry A:: TYPE(I,2,5,7,19,70)
- Entry M:: TYPE(70,71,72,73,74,75)
- Result:: TYPE (1, 2, 5, 7, 19, 70, 71, 72, 73, 74, 75)

There are rare exceptions to this basic principle:

In particular, when public configuration entries take exclusive values, i.e., values which can be used only for one exploiter. One example is the MPF (Message Processing Facility of OS/390) configuration data. For a given message number it can be specified, whether the messages must be suppressed or handled by an automation program. Conflicts can arise when two different exploiters want to handle the same message each in a different manner. An example is given for providing more clarity:
- Entry A:: ERB0001X USEREXIT(programX)
- Entry M:: ERB0001X USEREXIT(programY)

In this case the separation of configuration data into an automatically generated part and a manually editable part will not relieve the configuration program from investigating the manual part to detect the conflict. But due to the fact, that most public configuration data is of additive nature, these exceptions are rare.

Now the placement of configuration data during installation of a product P is described in more detail and referring to IBM OS/390 as the operating system and with 'parmlib' as one of the important examples for a configuration data set. The parmlib dataset has about 70 different types of configuration files. Each of these files has several configuration values ranging from about 30 to several hundred. So it can easily be understood, that there is a need for generating at least a subset of these parameter values with a configuration program Further, it should be noted that parmlib is only one of several points in OS/390 where configuration data is stored. Thus, the complexity of system management is yet higher.

The separation and coexistence of manual and automatically generated configuration data is achieved, e.g., by keeping the manual- part of parmlib in the SYS1.PARMLIB data set, and the automatically generated part of parmlib in the SYS1.AUTOMAT.PARMLIB data set. The concatenation of these two parmlibs is defined in a LOADxx member of SYS1.PARMLIB.

If for example a product, e.g., a Resource measurement Facility is configured, one of the steps is to authorize the product libraries. There are several different ways to do this manually, e.g. there may be entries in LNKLSTxx, LPALSTxx, IEAAPFxx or in PROGxx members.

If the product is configured manuallly, the system programmer edits the LNKLSTxx, LPALSTxx, IEAAPFxx or PROGxx members of SYS1 . PARMLIB.

If the product is configured with a configuration program, the configuration program updates the PROGxx member of SYS1.AUTOMAT.PARMLIB. This is easy for the configuration program, since it can rely on the conventions it uses for these updates.

With special reference to Fig. 2 - when a product is started to be installed -step 110 - it is decided if P is configured automatically or not - decision 120. If not, all private entries of product P are placed in the manual part, step 122, and all public entries of further supporters S for product P are placed in the manual part, too -step 124. Then the configuration is completed in this branch of the schema -step 150.

If it is automatically configured, e.g., by a configuration tool according to the invention, all private entries of product P are placed in the automatically generated part, i.e., a file which is dedicated for comprising only such variables -step 130.

Then, it is decided -decision 140- whether more configuration entries of a supporter S are needed for the product P. If not, the configuration is completed -step 150. If yes, a new entry is processed, and it is decided -decision 160- if the public configuration entry takes exclusive values or not.

If not, the public entry of supporter S is placed in the automatically generated part -step 170.

If yes - step 180- and this is the exceptional case then, it is checked if an entry exists already for that parameter. If one exists a consistency check is performed if the configuration entry is consistent with the desired entry of supporter S for product P -decision 190-. If it is not consistent a corresponding error message is issued by the configuration program.

If no entry exists till now, the desired entry is made -step 182. For these entries it is proposed to take the manual part, however, there is no reasonable obligation to prefer one part.

Then the procedure is repeated going back to step 140.

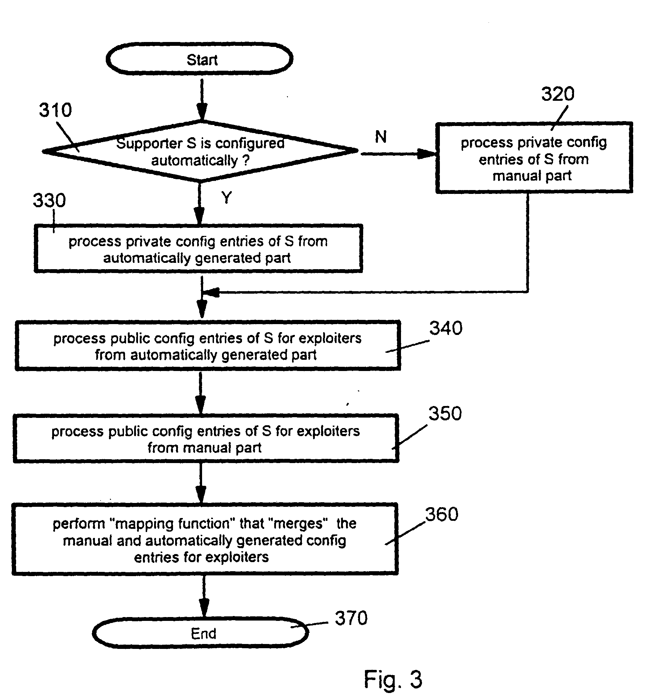

With reference to Fig. 3 it is described how a supporter S processes the configuration data.

First, it is decided if supporter S is configured automatically - decision 310.

If not, the private configuration entries of supporter S are processed from the manual part -step 320.

If yes, the private configuration entries of supporter S are processed from the automatically generated part -step 330.

Then, the public configuration entries of supporter S for other exploiters are processed for both branches 320, 330 from the automatically generated part -step 340.

Thereafter the public configuration entries from the manual part -step 350 are processed. Here, an alarm is issued if a conflict appears which is not able to be solved automatically and which requires control by the system programmer.

Then, the mapping function 360 described above is performed in order to satisfy the requirements of the supporter. The entries of both, automatically generated part and manual part are 'merged' forming the above described 'union' entries in order to best satisfy the requirements of the corresponding products.

Then processing is completed -step 370.

In the foregoing specification the invention has been described with reference to a specific exemplary embodiment thereof. It will, however, be evident that various modifications and changes may be made thereto without departing from the broader spirit and scope of the invention as set forth in the appended claims. The specification and drawings are accordingly to be regarded as illustrative rather than in a restrictive sense.

| LIST OF REFERENCE SIGNS | |
|---|---|
| 10 | system programmer |
| 12 | configuration program |
| 14 | automatically generated part |
| 16 | manual part |
| 110-190 | items during inventional method |
| 310-370 | steps during inventional method |
| | |
| | |
| | |
| | |
| | |

## Claims

1. A method for improving handling of program configuration data in mainframes and mainframe-like computer systems being arranged for simultaneous running of a plurality of application and system programs, the method being characterized by comprising the steps of
separating configuration data to be shared with a plurality of programs into a first group of parameters the setting conventions of which are governed solely by a configuration program and into a second group of parameters of said configuration data, the setting conventions of which are governed not solely by said configuration program,
storing both groups of parameters logically distinguishable,
providing a mapping function in order to map a plurality of entry values belonging to the same configuration parameter and being associated each with an individual program to a single entry representing a value which takes into account the union of requirements of said plurality of programs,
providing a control of consistency between entries having different exclusive values and stored for use by different programs.

2. The method according to claim 1, in which the groups of said first and said second parameters are distinguished by the step of
storing said first and said second group of parameters each in separate storage locations (14,16).

3. The method according to the preceding claim, comprising further the step of:
using a reference list holding each parameter's properties referring its exclusiveness for the decision where to store a parameter on installation of the associated program.

4. Installation tool for improved handling of program configuration data and for use with the installation of a program in mainframes and mainframe-like computer systems being arranged for simultaneous running of a plurality of said programs comprising means for
separating configuration data to be shared with a plurality of programs into a first group of parameters the setting conventions of which are governed solely by a configuration program and into a second group of parameters of said configuration data, the setting conventions of which are governed not solely by said configuration program,
storing both groups of parameters logically distinguishable,
providing a mapping function in order to map a plurality of entry values belonging to the same configuration parameter and being associated each with an individual program to a single entry representing a value which takes into account the union of requirements of said plurality of programs,
providing a control of consistency between entries having different exclusive values and stored for use by different programs.

5. The tool according to the preceding claim, comprising means for
storing said first and said second group of parameters each in separate storage locations(14,16).

6. The tool according to the preceding claim, comprising further means for
using a reference list holding each parameter's properties referring its exclusiveness for the decision where to store a parameter on installation of the associated program.

7. Operating system for improved handling of program configuration data and for supporting the installation of a program in mainframes and mainframe-like computer systems being arranged for simultaneous running of a plurality of said programs comprising means for
separating configuration data to be shared with a plurality of programs into a first group of parameters the setting conventions of which are governed solely by a configuration program and into a second group of parameters of said configuration data, the setting conventions of which are governed not solely by said configuration program,
storing both groups of parameters logically distinguishable,
providing a mapping function in order to map a plurality of entry values belonging to the same configuration parameter and being associated each with an individual program to a single entry representing a value which takes into account the union of requirements of said plurality of programs,
providing a control of consistency between entries having different exclusive values and stored for use by different programs.

8. The operating system according to the preceding claim, comprising means for
storing said first and said second group of parameters each in separate storage locations(14,16).

9. The operating system according to the preceding claim, comprising further means for
using a reference list holding each parameter's properties referring its exclusiveness for the decision where to store a parameter on installation of the associated program.
